# EUROPEAN PATENT SPECIFICATION

(11) **EP 4 379 907 B1**
(45) Date of publication and mention of the grant of the patent: **28.01.2026**
(21) Application number: 23213800.8
(22) Date of filing: 01.12.2023
(51) Int. Cl.: H01M 10/613, H01M 50/267, H01M 50/258, H01M 50/271, H01M 50/204, H01M 10/6556

(54) **BATTERY PACK**
BATTERIEPACK
BLOC-BATTERIE

(30) Priority: 01.12.2022 KR 20220165817
(43) Date of publication of application: 05.06.2024
(73) Proprietor: Samsung SDI Co., Ltd., Yongin-si, Gyeonggi-do 17084 (KR)
(72) Inventor: JEON, Jeehoon, 17084 Yongin-si (KR); JI, Taeho, 17084 Yongin-si (KR); MOON, Soodeok, 17084 Yongin-si (KR); AHN, Soomin, 17084 Yongin-si (KR); RYU, Jaelim, 17084 Yongin-si (KR); KWAK, Dongsik, 17084 Yongin-si (KR); WOO, Beomjun, 17084 Yongin-si (KR)
(74) Representative: Marks & Clerk LLP

(56) References cited:
- CN-A- 114 256 528
- CN-A- 114 696 021
- CN-U- 211 700 509
- CN-U- 213 636 194
- DE-U1- 202021 104 761

## Description

### BACKGROUND OF THE INVENTION

### (a) Field of the Invention

The present invention relates to a battery pack capable of simplifying a structure and preventing occurrence of an electrical error.

### (b) Description of the Related Art

Secondary batteries are widely used in mobile devices, auxiliary power devices, and the like.

In addition, the secondary batteries attracting attention as a main power source for electric vehicles, hybrid electric vehicles, plug-in hybrid electric vehicles, and the like, suggested as an alternative to solve various problems such as air pollution of conventional gasoline vehicles or diesel vehicles.

However, a battery module in which a plurality of battery cells are stacked and electrically connected in series and parallel is used for electric vehicles, etc., due to a need for a high-output and large-capacity battery.

In the battery module, a plurality of battery cells are stacked, and terminals exposed at opposite ends of each of the battery cells are electrically connected to provide high voltage.

For such a battery module, pack housings of various methods and sizes suitable for a shape and pack capacity are being manufactured, and in many ways, such as scalability, serviceability, and recycling, a current pack has its limitations. A battery pack of the prior art is disclosed for example in DE 20 2021 104761 U1.

That is, a conventional battery module has a problem in that it is not easy to change a design depending on energy capacity to be supplied, and a manufacturing efficiency is deteriorated.

The above information disclosed in this Background section is only for enhancement of understanding of the background of the invention, and therefore, it may contain information that does not form the prior art that is already known to a person of ordinary skill in the art.

### SUMMARY OF THE INVENTION

An embodiment of the present invention has been made in an effort to provide a battery pack that simplifies a structure of a battery module by eliminating a welding process, and prevents a risk of an electrical error by forming a cooling circuit at the outside.

An embodiment of the present invention provides a battery pack including: a base plate configured to include a cooling passage through which a refrigerant for cooling a plurality of battery modules is circulated by contacting the battery modules with a first surface, a lower cover configured to cover a second surface of the base plate, a frame portion installed on an upper side of a first surface of the base plate to accommodate the battery modules therein and to couple a plurality of frames to each other by a fastening member (i.e. and including a plurality of frames coupled to each other by a fastening member), and an upper cover covering an upper portion of the frame portion.

Spaces between the frames constituting the frame portion are sealed by a sealing member.

The cooling passage is formed on a second surface that is opposite to the first surface of the base plate.

The base plate includes at least two cooling plates having edges that are welded to each other.

The base plate includes a first cooling plate configured to contact the battery modules on a first surface and to protrude a first cooling passage on a second surface; a second cooling plate to have a first edge coupled to a first edge of the first cooling plate, a first surface contacting the battery modules, and a second surface from which a second cooling passage protrudes; and a third cooling plate to have a first edge coupled to a second edge of the second cooling plate, a first surface contacting the battery modules, and a second surface from which a third cooling passage protrudes.

The first to third cooling passages may be formed as a plurality in each of the first to third cooling plates.

A refrigerant supply guide may be installed at a first side of the second surface of the base plate to guide supply of a refrigerant to the first cooling passage and portions of the second cooling passage.

The refrigerant supply guide may be installed to supply the refrigerant to the first cooling passage of the first cooling plate and portions of the second cooling passage of the second cooling plate.

The refrigerant supply guide may extend in a width direction of the first cooling plate such that a portion thereof covers a portion of the second surface of the second cooling plate to supply the refrigerant to the first cooling passage and portions of the second cooling passage.

The refrigerant supply guide may include: a supply guide body configured to extend in the width direction of the first cooling plate, to cover the first cooling plate and portions of the second cooling plate together, and to move a refrigerant therein; an inlet protrusion configured to protrude from a first side of the supply guide body and into which the refrigerant flows; and a plurality of supply protrusions configured to protrude from a second side of the supply guide body and to supply a refrigerant to the first cooling passage and portions of the second cooling passage.

A distribution supply guide configured to distribute the refrigerant supplied by the refrigerant supply guide to circulate may be installed at a second side of the second surface of the base plate.

The distribution supply guide may include: a distribution guide body configured to extend in a width direction of the base plate from the second side of the second surface of the base plate and to move the refrigerant therein; and a plurality of distribution protrusions configured to protrude from a side surface of the distribution guide body and to be connected to the first cooling passage, the second cooling passage, and the third cooling passage.

A refrigerant discharge guide connected to some of the second cooling passages of the second cooling plate and the third cooling passage of the third cooling plate may be installed to guide discharge of the refrigerant to the outside on the second surface of the base plate.

The refrigerant discharge guide may extend in a width direction of the third cooling plate such that a portion thereof covers a portion of the second surface of the second cooling plate to discharge and guide the refrigerant flowing through the third cooling passage and some of the second cooling passages to the outside.

The refrigerant discharge guide may include: a discharge guide body configured to extend in a width direction of the third cooling plate such that a portion thereof covers a portion of the second surface of the second cooling plate, and to move the refrigerant therein; a connecting protrusion configured to protrude from a first side of the discharge guide body and connected to some of the second cooling passages and the third cooling passage to receive the refrigerant; and a discharge protrusion configured to protrude from a second side of the discharge guide body and to discharge the refrigerant to the outside.

The sealing member may include: a first sealer inserted into an inlet groove formed on any one surface between the frames; and a second sealer inserted into a position of a fastening hole formed in the frame to allow the fastening member to be coupled thereto.

The first sealer may contact a side surface of the frames by allowing a first side to be inserted into the inlet groove and a second side to partially protrude out of the inlet groove.

The first sealer may have a linear shape inserted into the inlet groove.

A bent portion that is bent to contact an upper surface of the frames may be formed at an upper end of the first sealer.

The bent portion of the first sealer may be adhered to the upper cover by an adhesive member.

The second sealer may have a through hole through which the fastening member extends, to be inserted into the fastening hole at a position between the frames.

The second sealer may have a round shape inserted into the fastening hole.

The frame portion may include: a first side frame coupled to a first edge of the base plate; a second side frame coupled to a second edge of the base plate; a first end frame configured to have opposite ends connected to a first end of each of the first side frame and the second side frame by a fastening member; a second end frame configured to have opposite ends connected to a second end of each of the first side frame and the second side frame by a fastening member; first reinforcement bar configured to have a first end connected to a side surface of the first side frame by a fastening member and a second end connected to a side surface of the second side frame by a fastening member; and second reinforcement bar configured to have a first end connected to a side surface of the first end frame by a fastening member and a second end connected to a side surface of the second end frame by a fastening member, and installed in a state of crossing the first reinforcement bars.

An adhesive groove may be formed on a lower surface of the frame portion, and an adhesive for fixing the base plate may be applied to the adhesive groove.

The battery modules each may include: a first side plate configured to support a first side surface of a plurality of battery cells; a second side plate configured to support a second side surface of the battery cells; a first end plate configured to have opposite ends connected to a first end of each of the first side plate and the second side plate by a fastening member; a second end plate configured to have opposite ends connected to a second end of each of the first side plate and the second side plate by a fastening member; an insulating plate configured to have a first end connected to a side surface of the first end plate and a second end connected to a side surface of the second end plate and coated with an adhesive fixed to side surfaces of the battery cells at opposite side surfaces; and an upper plate configured to cover an upper portion of the battery cells.

A first coupling hole to which a first end of the insulating plate is fixed may be formed on a side surface of the first end plate.

A second coupling hole to which a second end of the insulating plate is fixed may be formed on a side surface of the second end plate.

The insulating plate may have a first end from which a first coupling protrusion that is inserted and fixed into a first coupling hole protrudes, and a second end from which a second coupling protrusion that is inserted and fixed into the second coupling hole protrudes.

A surface of each of the first side plate and the second side plate in contact with the battery cell may be insulatingly coated.

A first mount protrusion fixed to the upper cover by a fastening member may protrude from an edge of the first end plate.

A second mount protrusion fixed to the upper cover by a fastening member may protrude from an edge of the second end plate.

The upper plate may include: a plurality of bus bars installed to be electrically connected to terminals of the battery cells; and a gas tunnel portion formed between the bus bars in a longitudinal direction of the upper cover.

The battery modules each may include: a first side portion configured to support a first side surface of a plurality of battery cells; a second side portion configured to support a second side surface of the battery cells; a first end portion configured to have opposite ends connected to a first end of each of the first side portion and the second side portion by a fastening member; a second end portion configured to have opposite ends connected to a second end of each of the first side portion and the second side portion by a fastening member; and an insert bar inserted into the first side portion and the second side portion.

Terminals of the battery cells may be positioned to face a direction of the first side portion and the second side portion.

The first side portion and the second side portion may be made of a plastic material.

The first side portion may include: a first plate configured to have a plurality of through holes into which terminals of the battery cells are inserted; and a first insert portion configured to protrude from a side surface of the first plate and to have an insertion hole into which the insert bar is inserted that is formed therein.

The first insert portion may be formed at a first edge position and a second edge position with the through hole provided therebetween in the first plate.

A bus bar electrically connected to the terminal extending through the through hole may be installed in the first side portion.

An adhesive may be applied between the first plate and the battery cells.

The second side portion may include: a second plate configured to have a plurality of through holes into which terminals of the battery cells are inserted; and a second insert portion configured to protrude from a side surface of the second plate and to have an insertion hole into which the insert bar is inserted that is formed therein.

The second insert portion may be formed at a first edge position and a second edge position with the through hole provided therebetween in the second plate.

A bus bar electrically connected to the terminal extending through the through hole may be installed in the second side portion.

An adhesive may be applied between the second plate and the battery cells.

At least some of the above and other features of the invention are set out in the claims.

According to an embodiment of the present invention, the battery modules may be assembled to be disassemblable and assemblable by fastening of a fastening member replacing a welding process in an assembly process, and thus a structure of the battery modules may be simplified and a design thereof may be easily changed.

According to an embodiment of the present invention, a cooling circuit is formed in an external portion of the base plate supporting the battery module, and thus it is possible to prevent occurrence of an electrical error during an operation of the battery modules.

### BRIEF DESCRIPTION OF THE DRAWINGS

FIG. 1 illustrates a schematic perspective view showing a battery pack according to an embodiment of the present invention.
FIG. 2 illustrates a schematic exploded perspective view showing the battery pack of FIG. 1.
FIG. 3 illustrates a schematic perspective view showing a base plate according to an embodiment of the present invention.
FIG. 4 illustrates a cross-sectional view taken along a line A-A of FIG. 3.
FIG. 5 illustrates an exploded perspective view of main parts showing a state in which a refrigerant supply guide, a distribution supply guide, and a refrigerant discharge guide are separated from the base plate of FIG. 3.
FIG. 6 illustrates an exploded perspective view showing a state in which the base plate of FIG. 3 is separated into first to third cooling plates.
FIG. 7 illustrates a schematic perspective view showing a frame portion according to an embodiment of the present invention.
FIG. 8 illustrates an exploded perspective view showing the frame portion of FIG. 7.
FIG. 9 illustrates an exploded perspective view of main parts showing a state in which a sealing member is installed inside a frame portion according to an embodiment of the present invention.
FIG. 10 illustrates main parts schematically showing a bent portion that is formed at an upper portion of a first sealer of the sealing member of FIG. 9 to be fixed to an upper cover by an adhesive.
FIG. 11 illustrates an exploded perspective view of main parts showing a state in which an adhesive groove is formed on a lower surface of a frame portion and an adhesive is applied to the adhesive groove according to an embodiment of the present invention.
FIG. 12 illustrates a schematic perspective view showing a battery module according to a first embodiment of the present invention.
FIG. 13 illustrates an exploded perspective view showing a state in which an upper plate of the battery module of FIG. 12 is separated.
FIG. 14 illustrates a perspective view showing a state in which an upper plate of the battery module of FIG. 12 is removed.
FIG. 15 illustrates a schematic exploded perspective view showing the battery module of FIG. 14.
FIG. 16 illustrates a schematic perspective view showing coupling of an insulating plate and a first end plate according to the first embodiment of the present invention.
FIG. 17 illustrates a schematic perspective view showing the insulating plate of FIG. 16.
FIG. 18 illustrates a state in which a gas tunnel portion is formed in the battery module according to the first embodiment of the present invention.
FIG. 19 illustrates a schematic exploded perspective view showing a battery module according to a second embodiment of the present invention.
FIG. 20 illustrates a schematic perspective view showing a first side portion of FIG. 19.
FIG. 21 illustrates a schematic side view showing a state in which an insert bar of the battery module of FIG. 19 is installed.

### DETAILED DESCRIPTION OF THE EMBODIMENTS

Hereinafter, the present invention will be described more fully with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

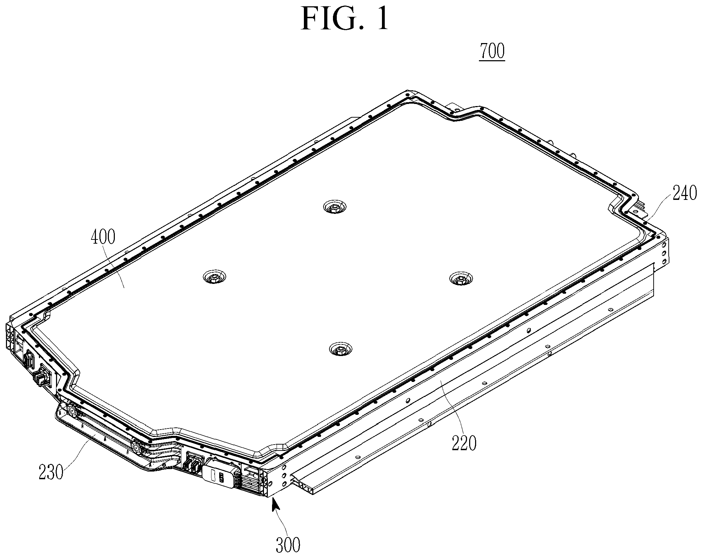

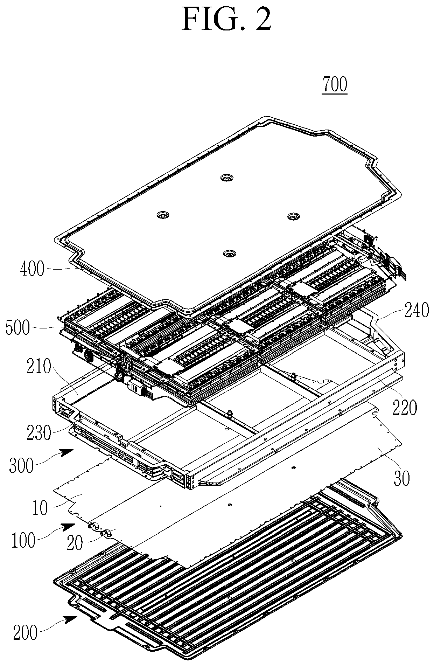

FIG. 1 illustrates a schematic perspective view showing a battery pack according to an embodiment of the present invention, and FIG. 2 illustrates a schematic exploded perspective view showing the battery pack of FIG. 1.

As illustrated in FIG. 1 and FIG. 2, according to a first embodiment of the present invention, the battery pack 700 includes: a base plate 100 configured to include a cooling passage in which a refrigerant for cooling a plurality of battery modules 500 circulates by contacting a first surface thereof with the battery modules 500; a lower cover 200 configured to cover a second surface of the base plate100; a frame portion 300 configured to be installed at an upper side of the first surface of the base plate 100, to accommodate a plurality of battery modules 500 therein, and to have a plurality of frames coupled to each other by a fastening member; and an upper cover 400 configured to cover an upper portion of the frame portion 300.

The base plate 100 may be installed to support lower portions of the battery modules 500 accommodated inside the frame portion 300. That is, the base plate 100 may be installed below the frame portion 300 to enable battery module cooling while the first surface, which is an upper surface, supports the lower portions of the battery modules 500. A second surface, which is a lower surface, of the base plate 100, may be covered by a lower cover 200.

This base plate 100 may include at least two plates, to be installed in a state in which edges are coupled to each other.

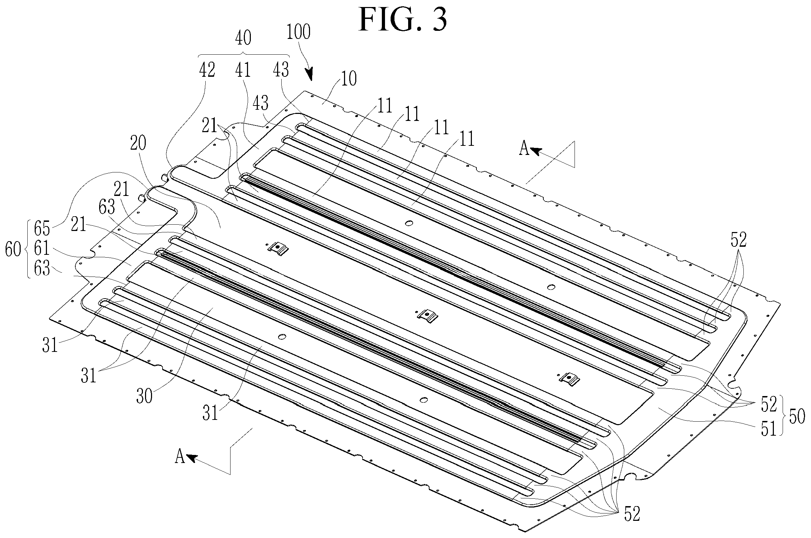

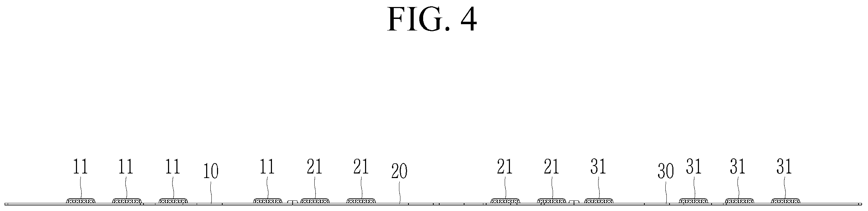

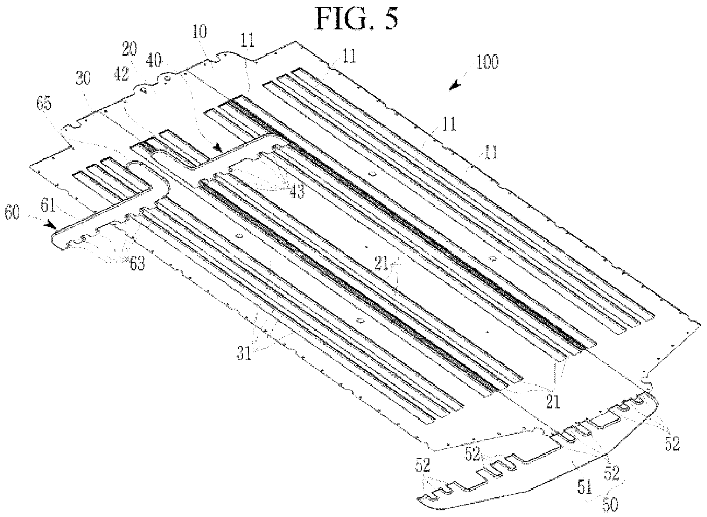

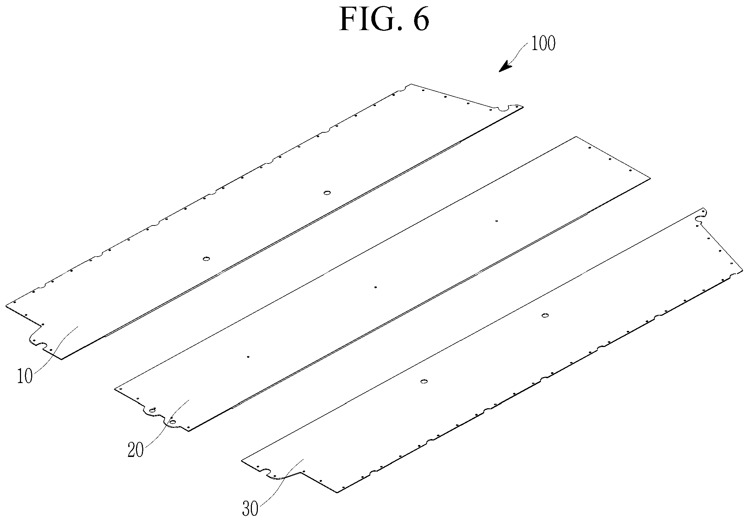

FIG. 3 illustrates a schematic perspective view showing a base plate according to an embodiment of the present invention, FIG. 4 illustrates a cross-sectional view taken along a line A-A of FIG. 3, FIG. 5 illustrates an exploded perspective view of main parts showing a state in which a refrigerant supply guide, a distribution supply guide, and a refrigerant discharge guide are separated from the base plate of FIG. 3, and FIG. 6 illustrates an exploded perspective view showing a state in which the base plate of FIG. 3 is separated into first to third cooling plates.

In more detail with reference to FIG. 3 to FIG. 6, the base plate 100 may include a first cooling plate 10 in which a first cooling passage 11 protrudes, a second cooling plate 20 in which a second cooling passage 21 protrudes, and a third cooling plate 30 in which a third cooling passage 31 protrudes. The first to third cooling plates 10, 20, and 30 may be welded together on a same plane in a state in which edges are in contact with each other.

The first cooling plate 10 may constitute a portion of the base plate 100, and may be formed to have a plate shape, so as to contact and support the lower portions of the battery modules 500 on the first surface, which is the upper surface.

The first cooling passage 11 for cooling the battery modules 500 may be formed on a second surface, which is a rear surface, of the first cooling plate 10.

The first cooling passage 11, which protrudes from the second surface of the first cooling plate 10, may be formed to circulate a refrigerant supplied by a refrigerant supply guide 40 to be described later.

The first cooling passage 11 may include a plurality of cooling passages formed on the second surface of the first cooling plate 10 along a longitudinal direction thereof, and in the present embodiment, four passages may be formed so that the refrigerant is movable therein.

Although the first cooling passage 11 is illustratively described as being formed as four passages, the present invention is not necessarily limited thereto, and an appropriate number of first cooling passages may protrude from the second surface corresponding to a length and width of the first cooling plate 10 such that a sufficient refrigerant for cooling the battery modules 500 is moved.

A second cooling plate 20 may be coupled to a side surface of the first cooling plate 10.

The second cooling plate 20 is formed with a similar length and width to those of the first cooling plate 10, and may be coupled with one edge in contact with one edge of the first cooling plate 10.

Herein, the first cooling plate 10 and the second cooling plate 20 may be welded in a state in which edges are in contact with each other. Thus, the first cooling plate 10 and the second cooling plate 20 may be connected to form an integrated bottom plate.

The second cooling passage 21 for cooling the battery modules 500 may be formed on a second surface, which is a rear surface, of the second cooling plate 20.

The second cooling passage 21 may include a plurality of second cooling passages 21 that protrude from the second surface of the second cooling plate 20, some may be connected to the refrigerant supply guide 40, and the others may be connected to the refrigerant discharge guide 60.

That is, the second cooling passage 21 may be formed such that a refrigerant is introduced and circulated through the refrigerant supply guide 40 and the refrigerant that has been circulated is discharged to the outside through the refrigerant discharge guide 60.

The second cooling passage 21 may include a plurality of cooling passages formed on the second surface of the second cooling plate 20 along a longitudinal direction thereof, and in the present embodiment, four passages may be formed so that the refrigerant is movable therein.

Although the second cooling passage 21 is illustratively described as being formed as four passages, the present invention is not necessarily limited thereto, and an appropriate number of second cooling passages may protrude from the second surface corresponding to a length and width of the second cooling plate 20 such that a sufficient refrigerant for cooling the battery modules 500 is moved.

A third cooling plate 30 may be coupled to a side surface of the second cooling plate 20.

The third cooling plate 30 is formed with a similar length and width to those of the second cooling plate 20, and may be coupled with one edge in contact with one edge of the second cooling plate 20.

Herein, the second cooling plate 20 and the third cooling plate 30 may be welded in a state in which edges are in contact with each other. Thus, the second cooling plate 20 and the third cooling plate 30 may be connected to form an integrated bottom plate.

That is, the first cooling plate 10, the second cooling plate 20, and the third cooling plate 30 are welded together with edges in contact with each other to form the base plate 100 forming an integrated bottom plate.

Meanwhile, as described above, the refrigerant supply guide 40, the distribution supply guide 50, and the refrigerant discharge guide 60 may be installed on the base plate 100, and thus a refrigerant may be installed to circulate through the first to third cooling passages 11, 21, and 31.

The refrigerant supply guide 40 may include a supply guide body 41 covering the first cooling plate 10 and portions of the second cooling plate 20, and an inlet protrusion 42 and a supply protrusion 43 protruding from the supply guide body 41.

The supply guide body 41 may be installed to extend in a width direction of the first cooling plate 10, so as to cover portions of the first cooling plate 10 and the second cooling plate 20 and to allow a refrigerant to move therein.

The inlet protrusion 42 may protrude from one side of the supply guide body 41 so that the refrigerant flows into the supply guide body 41.

That is, the inlet protrusion 42 may protrude from a side surface of the supply guide body 41 so as to be connected to a predetermined refrigerant supply source and to receive the refrigerant.

The supply protrusion 43 may protrude from a second side surface of the supply guide body 41 to supply a refrigerant to the first cooling passage 11 and portions of the second cooling passage 21. A plurality of supply protrusions 43 may protrude from the side of the supply guide body 41 to be connected to the first cooling passage 11 and the second cooling passage 21.

The refrigerant supplied by the refrigerant supply guide 40 configured as described above may be supplied to the first cooling passage 11 and portions of the second cooling passage 21 to move toward the distribution supply guide 50.

The distribution supply guide 50 may be installed in the base plate 100 such that the refrigerant supplied through the refrigerant supply guide 40 circulates in the first to third cooling passages 11, 21, and 31.

More specifically, the distribution supply guide 50 may extend in the width direction of the base plate 100, and may include, therein, a distribution guide body 51 through which the refrigerant is moved, and a plurality of distribution protrusions 52 protruding from a side surface of the distribution guide body 51 and connected to the first cooling passage 11, the second cooling passage 21, and the third cooling passage 31.

The distribution guide body 51 may extend in a width direction of the base plate 100, and may be installed at an edge of the second surface of the base plate 100 so as to be connectable to each of the first to third cooling passages 11, 21, and 31.

The distribution protrusions 52, which protrude from the side surface of the distribution guide body 51, may protrude from the side of the distribution guide body 51 in a same number as a number of first to third cooling passages, so as to be connected to each of the first to third cooling channels 11, 21, and 31.

As described above, the distribution supply guide 50 may be connected to the refrigerant supply guide 40 by the first cooling passage 11 and portions of the second cooling passage 21, and thus may be installed to receive the refrigerant and to distribute and supply the refrigerant in a direction of the refrigerant discharge guide 60.

That is, the distribution supply guide 50 may be connected to the refrigerant supply guide 40 by the first cooling passage 11 and portions of the second cooling passage 21 to receive the refrigerant, and the supplied refrigerant may be distributed to the refrigerant discharge guide 60 connected to remaining portions of the second cooling passage 21 and the third cooling passage 31.

Accordingly, the refrigerant circulates between the first to third cooling passages 11, 21, and 31 between the refrigerant supply guide 40, the distribution supply guide 50, and the refrigerant discharge guide 60 on the second surface, which is the lower surface of the base plate 100, and thus effective cooling of the battery modules 500 is possible.

Meanwhile, the refrigerant discharge guide 60 may extend in a width direction of the third cooling plate 30 so that a portion thereof may extend to cover a portion of the second surface of the second cooling plate 20.

Accordingly, the refrigerant discharge guide 60 may discharge and guide the refrigerant flowing through the third cooling passage 31 and portions of the second cooling passage 21 to the outside.

More specifically, the refrigerant discharge guide 60 may extend in the width direction of the third cooling plate 30 such that a portion thereof covers portions of the second surface of the second cooling plate 20, and may include, therein, a discharge guide body 61 through which the refrigerant is moved, a connection protrusion 63 protruding from a first side of the discharge guide body 61 and connected to the portions of the second cooling passage 21 and the third cooling passage 31 through which the refrigerant flows, and a discharge protrusion 65 protruding from a second side of the discharge guide body 61 to discharge the refrigerant to the outside.

The discharge guide body 61 may extend in the width direction of the third cooling plate 30, and may be installed to cover a portion of the second cooling plate 20 together. That is, the discharge guide body 61 may be installed to allow a portion thereof to further extend to cover a portion of the second cooling plate 20 together while covering the width direction of the third cooling plate 30.

The connection protrusion 63 may protrude such that a first side of the discharge guide body 61 protrudes and is connected to a portion of the second cooling passage 21 and the third cooling passage 31 to allow the refrigerant to flow therein, and may be connected such that the refrigerant discharged from the distribution supply guide 50 is discharged to the outside.

The discharge protrusion 65 may protrude from a second side of the discharge guide body 61 so as to discharge the refrigerant to the outside.

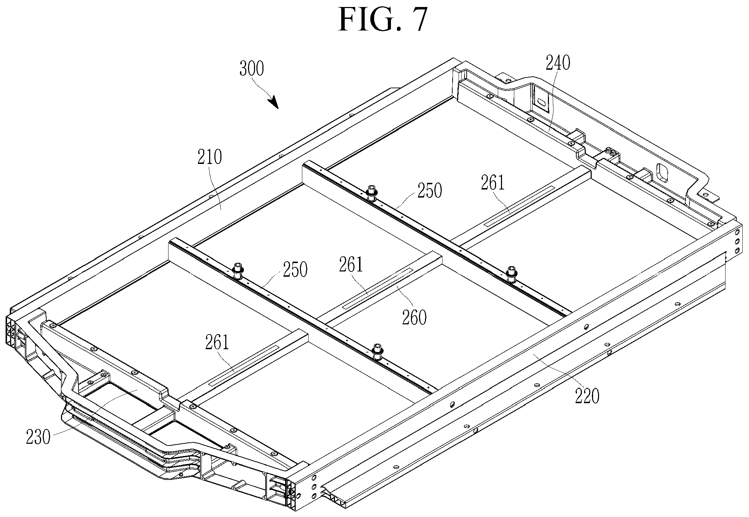

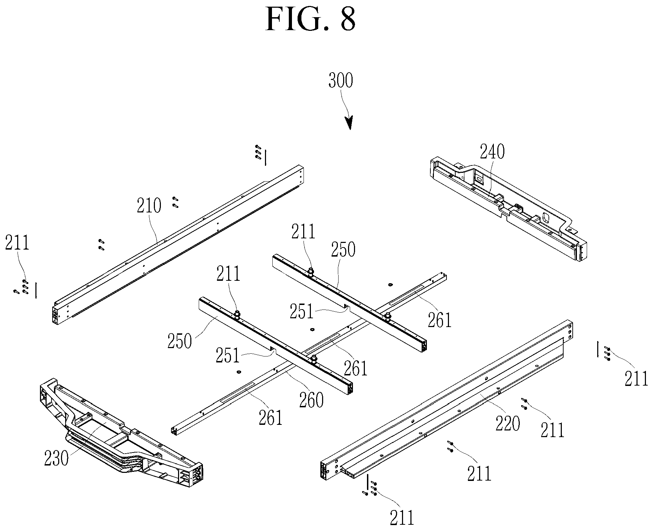

FIG. 7 illustrates a schematic perspective view showing a frame portion according to an embodiment of the present invention, and FIG. 8 illustrates an exploded perspective view showing the frame portion of FIG. 7.

As illustrated in FIG. 7 and FIG. 8, the frame portion 300 may include a first side frame 210 and a second side frame 220, a first end frame 230 and a second end frame 240 connecting the first side frame 210 and the second side frame 220 to each other, and a first reinforcement bar 250 and a second reinforcement bar 260.

The first side frame 210 may be coupled to a first edge of the base plate 100, and may be installed to support a first side of the battery modules 500.

The second side frame 220 may be coupled to a second edge of the base plate 100, and may be installed to support a second side of the battery modules 500.

The first end frame 230 may be installed to connect between first ends of each of the first side frame 210 and the second side frame 220.

That is, a first end of the first end frame 230 may be connected to a second end of the first side frame 210 by a fastening member 211, and a second end thereof may be connected to a first end of the second side frame 220 by the fastening member 211.

The second end frame 240 may be installed to connect between second ends of each of the first side frame 210 and the second side frame 220.

That is, a first end of the second end frame 240 may be connected to a second end of the first side frame 210 by the fastening member 211, and a second end thereof may be connected to a second end of the second side frame 220 by the fastening member 211.

A first or second reinforcement bar 250 or 260 may be connected at an inside where the first or second side frame 210 or 220 and the first or second end frame 230 or 240 are connected to each other by the fastening member 211.

The first and second reinforcement bars 250 and 260 may be installed in a state of crossing each other, and may divide the inside of the frame portion 300 into a plurality of spaces, so that the battery modules may be accommodated in a properly arranged state.

The first reinforcement bar 250 may have a first end connected to a side surface of the first side frame 210 by a fastening member 211 and a second end connected to a side surface of the second side frame 220 by a fastening member 211.

A plurality of first reinforcement bars 250 may be installed to be spaced apart from each other at equal intervals between the first side frame 210 and the second side frame 220.

The second reinforcement bar 260 may have a first end connected to a side surface of the first end frame 230 by the fastening member 211 and a second end connected to a side surface of the second end frame 240 by the fastening member 211.

The second reinforcement bar 260 may be installed in a state of crossing the first reinforcement bar 250. To this end, a coupling groove 251 may be formed in the first reinforcement bar 250 at a position intersecting the second reinforcement bar 260.

Accordingly, the first reinforcement bar 250 and the second reinforcement bar 260 may be installed in a state of crossing each other to form a plurality of partitioned spaces such that the battery modules 500 are inserted into the frame portion 300.

An insertion groove 261 for inserting a cell supervising circuit (CSC) may be formed in the second reinforcement bar 260. A plurality of insertion grooves 261 are formed in the second reinforcement bar 260, so that a plurality of cell supervising circuit boards may be inserted and fixed.

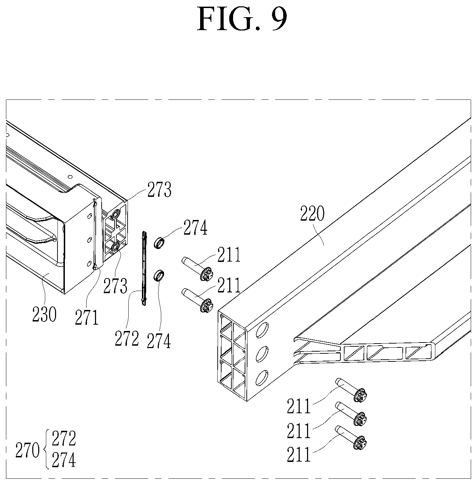

Meanwhile, spaces between a plurality of frames constituting the frame portion 300 may be sealed by a sealing member 270 (see FIG. 9).

The sealing member 270 may be installed to enable stable sealing to prevent inflow of external foreign substances at the assembly position in a process of assembling the frames constituting the frame portion 300 using the fastening member 211.

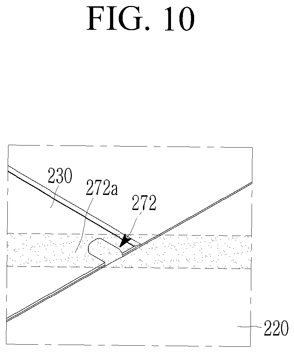

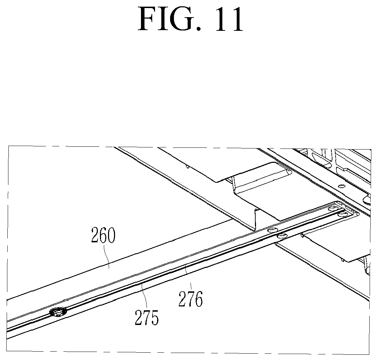

FIG. 9 illustrates a exploded perspective view of main parts showing a state in which a sealing member is installed inside a frame portion according to an embodiment of the present invention, FIG. 10 illustrates main parts schematically showing a bent portion is formed at an upper portion of a first sealer of the sealing member of FIG. 9 to be fixed to an upper cover by an adhesive, and FIG. 11 illustrates a exploded perspective view of main parts showing a state in which an adhesive groove is formed on a lower surface of a frame portion and an adhesive is applied to the adhesive groove according to an embodiment of the present invention.

In more detail with reference to FIG. 9 to FIG. 11, the sealing member 270 may include a first sealer 272 inserted into the inlet groove 271 formed on a surface between the plurality of frames, and a second sealer 274 inserted into a fastening hole 273 formed in the frames such that the fastening member is coupled thereto.

The inlet groove 271 may be formed on any one surface of the frames facing each other, and may be formed at one edge of cross-sections of the frames.

The inlet groove 271 may be formed with a long length in the vertical direction at an adjacent position where a fastening hole 273 is formed at an edge of one end of the frames.

A first sealer 272 may be inserted into the inlet groove 271.

The first sealer 272 may be formed with a long straight length corresponding to a length of the inlet groove 271, and may be inserted to seal between the frames constituting the frame portion 300.

The first sealer 272 may be made of a rubber material, and a portion of the first sealer 272 may protrude out of the inlet groove 271 to contact the surface of the frame in the state of being inserted into the inlet groove 271, and may seal between the frames.

A bent portion 272a may be formed at an upper portion of the first sealer 272 to be in contact with an upper surface of the frames.

A portion of the bent portion 272a may be bent such that the frame comes into contact with the upper surface in a state where the first sealer 272 is inserted into the inlet groove 271, and may be contact-fixed to an inner surface of the upper cover 400.

That is, the upper cover 400 may be fixed with an inner surface in contact with the surface of the bent portion 272a in a process of being fixed to cover an upper portion of the frame portion 300.

An adhesive may be applied to the inner surface of the upper cover 400 at a position in contact with the bent portion 272a, and thus stable fixation of the upper cover 400 is possible.

Meanwhile, the second sealer 274 may have a through hole through which the fastening member 211 extends, to be inserted into the fastening hole 273 at a position between the frames.

That is, the second sealer 274 may be formed to have a ring shape with a through hole such that the fastening member 211 extends through the through hole to be fastened to the frame.

A number of second sealers 274 corresponding to a number of fastening members 211 may be inserted into positions where the fastening members 211 are fastened.

The second sealer 274 is made of the same rubber material as that of the first sealer 272, and can be inserted at a position where the fastening member 211 is fastened so that a stable sealing action is possible so that foreign materials do not inflow.

Meanwhile, an adhesive groove 275 may be formed on a lower surface of the frame portion 300.

The adhesive groove 275 may be formed on surfaces of the first and second end frames 230 and 240, the first and second reinforcement bars 250 and 260, and the first and second side frames 210 and 220 constituting the frame portion 300.

An adhesive 276 may be applied to the adhesive groove 275.

A portion of the adhesive 276 may protrude out of the adhesive groove 275 in a state of being inserted into the adhesive groove 275, and thus may further provide a fixing force to enable more stable coupling during a coupling process of the base plate 100. That is, the base plate 100 may be more stably fixed to the frame portion 300 by the fastening member 211 and the adhesive 276.

As described above, the battery pack 100 of the present embodiment may be assembled using a fastening member such as a bolt member or a screw member, and a sealing member may be inserted into the assembly position, and thus robust assembly and stable assembly without inflow of foreign substances are possible.

In addition, the cooling line may be installed in an integrated state on the base plate on which a plurality of battery modules are seated, and thus stable cooling of the battery modules may be possible, thereby improving the stability more.

**In** addition, all of the base plate 100, the frame portion 300, and the upper cover 400 may be formed of an aluminium material and assembled using a fastening member 211, and thus it is easy to disassemble and assemble, so free design change is possible, and it is possible to take action quickly in response to errors.

**In** the meantime, as described above, the frame portion 300 may be partitioned into a plurality of partition spaces by the first and second side frames 210 and 220, the first and second end frames 230 and 240, and the first and second reinforcement bars 250 and 260, and the battery modules 500 may be inserted into the partition spaces.

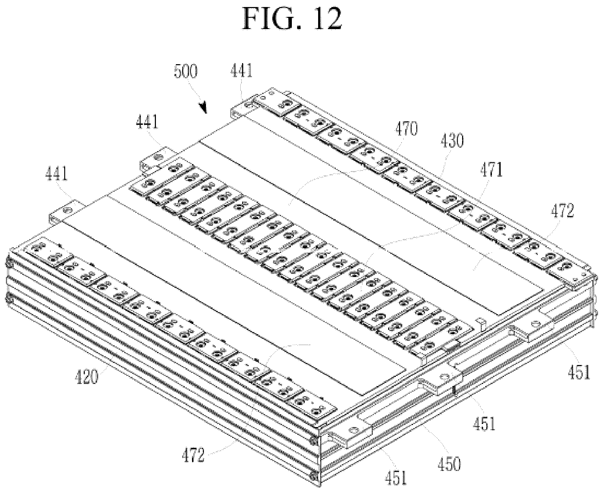

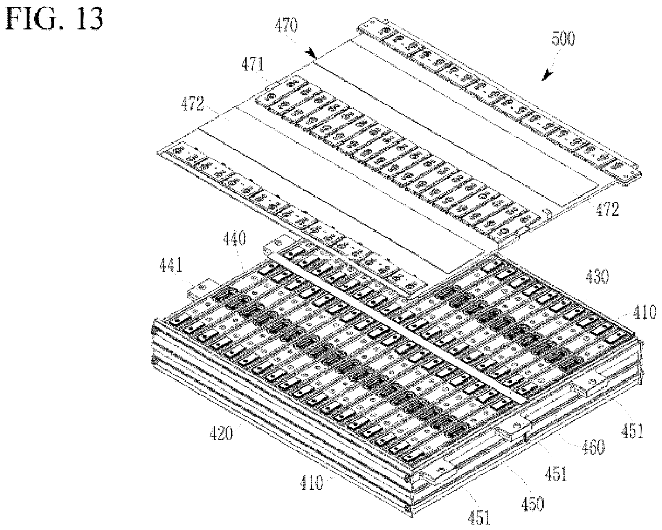

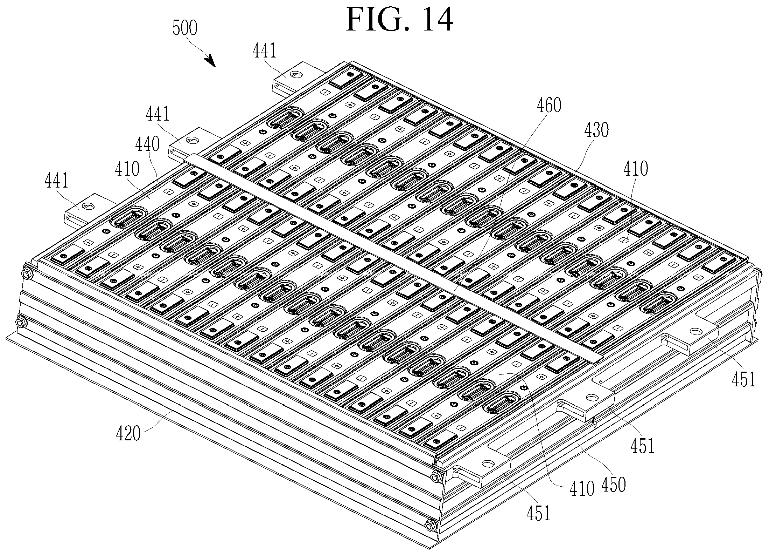

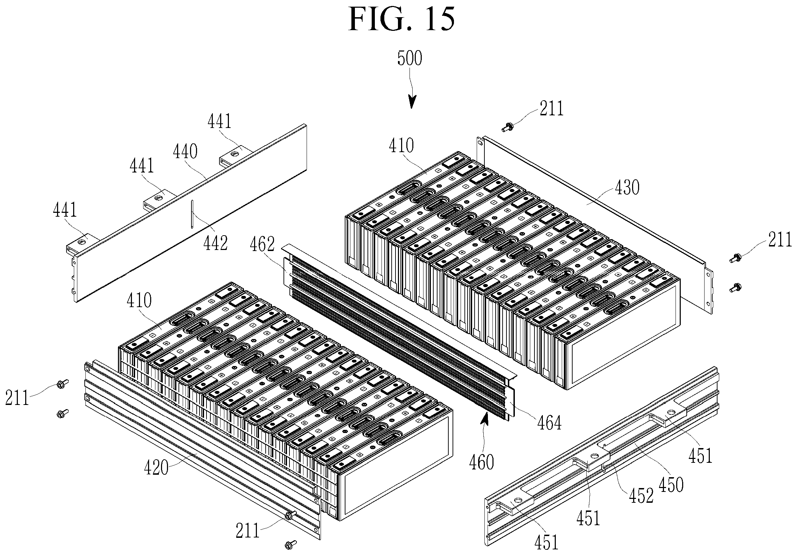

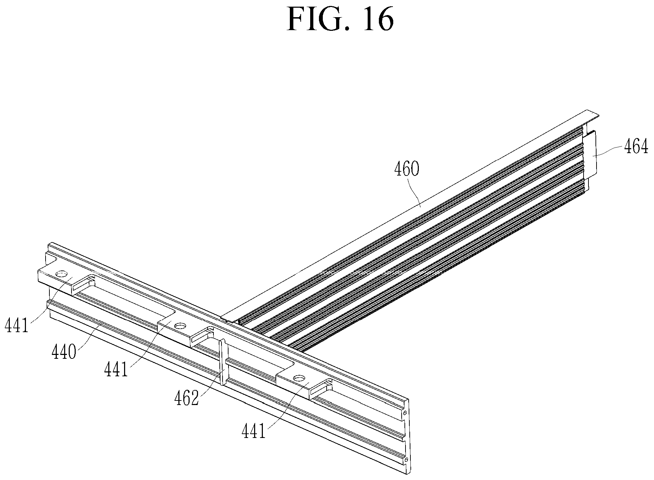

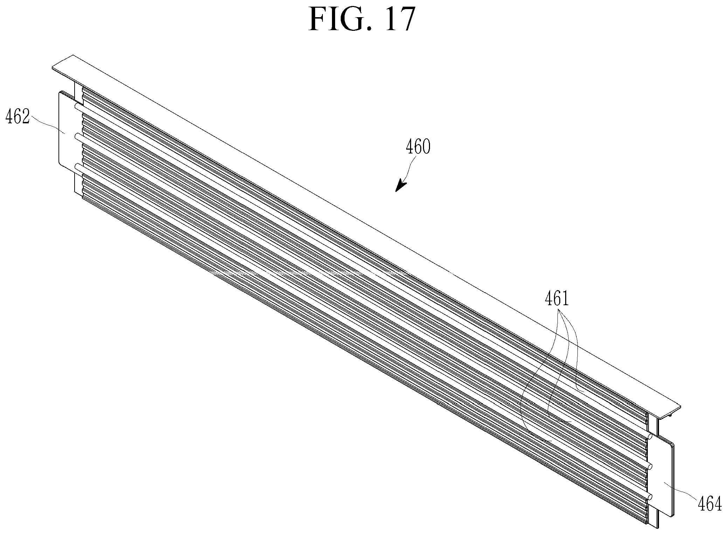

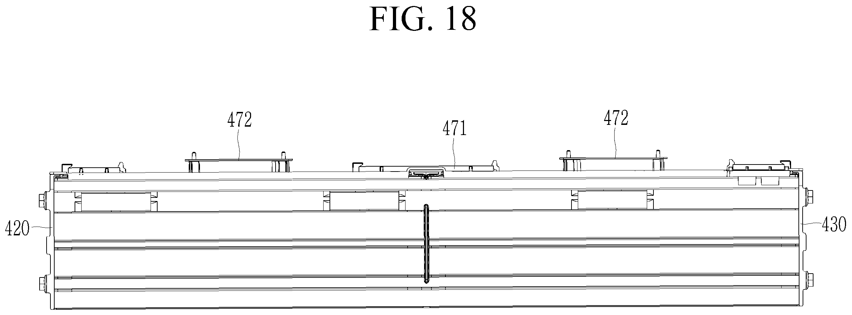

FIG. 12 illustrates a schematic perspective view showing a battery module according to a first embodiment of the present invention, FIG. 13 illustrates an exploded perspective view showing a state in which an upper plate of the battery module of FIG. 12 is separated, FIG. 14 illustrates a perspective view showing a state in which an upper plate of the battery module of FIG. 12 is removed, FIG. 15 illustrates a schematic exploded perspective view showing the battery module of FIG. 14, FIG. 16 illustrates a schematic perspective view showing coupling of an insulating plate and a first end plate according to the first embodiment of the present invention, FIG. 17 illustrates a schematic perspective view showing the insulating plate of FIG. 16, and FIG. 18 illustrates a state in which a gas tunnel portion is formed in the battery module according to the first embodiment of the present invention.

As illustrated in FIG. 12 to FIG. 18, according to the first embodiment of the present invention, the battery modules 500 may include a first side plate 420 supporting a first side of a plurality of battery cells 410, a second side plate 430 supporting a second side of the battery cells 410, a first end plate 440 having opposite ends connected to a first end of each of the first side plate 420 and the second side plate 430 by the fastening member 211, a second end plate 450 having opposite ends connected to a second end of each of the first side plate 420 and the second side plate 430 by the fastening member 211, an insulating plate 460 coated with an adhesive 461 fixed to side surfaces of the battery cells 410, at opposite side surfaces having a first end connected to a side surface of the first end plate 440, and a second end connected to a side surface of the second end plate 450, and a upper plate 470 covering a upper portion of the battery cells 410.

The first side plate 420 may be installed to support a first side of the battery cells 410.

The first side plate 420 may be supported in a state of being in surface contact with a side surface of the battery cells 410. Herein, a surface of the first side plate 420 in surface contact with the battery cells 410 may be coated with insulation. Thus, the battery cells 410 may be stably accommodated inside the frame portion 300 in an electrically insulated state.

The second side plate 430 may be installed to support a second side of the battery cells 410.

The second side plate 430 may be supported in a state of being in surface contact with a side surface of the battery cells 410. Herein, a surface of the second side plate 430 in surface contact with the battery cell 410 may be coated with insulation. Accordingly, the battery modules 500 may be installed in an electrically insulated state between the first side plate 420 and the second side plate 430.

Meanwhile, the first end plate 440 may be installed to connect first ends of the first side plate 420 and the second side plate 430 to each other.

That is, a first end of the first end plate 440 may be connected to a first end of the first side plate 420 by a fastening member 211, and a second end thereof may be connected to a first end of the second side plate 430 by the fastening member 211.

The second end plate 450 may be installed to connect second ends of the first side plate 420 and the second side plate 430 to each other.

That is, a first end of the second end plate 450 may be connected to a second end of the first side plate 420 by a fastening member 211, and a second end thereof may be connected to a second end of the second side plate 430 by the fastening member 211.

Meanwhile, a first mount protrusion 441 fixed to the upper cover 400 by a fastening member may protrude from an upper edge of the first end plate 440.

The first mount protrusion 441 may protrude to a side surface of the first end plate 440 in a state where a fastening hole to which the fastening member 211 is coupled is formed, and a first side of the upper cover 400 may be stably coupled to an upper side of the frame portion 300.

A second mount protrusion 451 fixed to the upper cover 400 by a fastening member may protrude from an upper edge of the second end plate 450.

The second mount protrusion 451 may protrude to a side surface of the second end plate 450 in a state where a fastening hole to which the fastening member 211 is coupled is formed, and a second side of the upper cover 400 may be stably coupled to an upper side of the frame portion 300.

Meanwhile, the insulating plate 460 may be connected in an inside where the first and second side plates 420 and 430 and the first and second end plates 440 and 450 connected to each other by the fastening member 211.

The insulating plate 460 may have a first end connected to a side surface of the first end plate 440 and a second end connected to a side surface of the second end plate 450.

To this end, a first coupling hole 442 to which a first end of the insulating plate 460 is fixed may be formed on a side surface of the first end plate 440. In addition, a second coupling hole 452 to which a second end of the insulation plate 460 is fixed may be formed on a side surface of the second end plate 450.

The insulating plate 460 may have a first end from which a first coupling protrusion 462 that is inserted and fixed into a first coupling hole 442 protrudes, and a second end from which a second coupling protrusion 464 that is inserted and fixed into the second coupling hole 452 protrudes.

An adhesive 461 fixed to a side surface of the battery cells 410 may be applied to opposite surfaces of the insulating plate 460.

The adhesive 461 is applied to each of the opposite side surfaces of the insulating plate 460, and thus a fixing force may be provided so that the battery modules 500 accommodated inside the frame portion 300 are stably positioned on a side surface of the insulating plate 460.

Meanwhile, a plurality of bus bars 471 installed to be electrically connected to terminals of the battery cells 410 may be installed in an upper plate 470.

The bus bars 471 may be installed on the upper plate 470 in a state of being disposed in the first direction to be electrically connected to the terminals of the battery cells 410 positioned in the first direction (z-axis direction) inside the frame portion 300.

A gas tunnel portion 472 may be installed on a side surface of the bus bar 471.

The gas tunnel portion 472 may be installed on the upper plate 470 to discharge gas generated by a cell event caused by an abnormal operation of the battery modules 500 to the outside.

The gas tunnel portion 472 is formed with a long length along a longitudinal direction of the upper plate 470 between a plurality of bus bars 471, and in the present embodiment, installation of a pair in the upper plate 470 with the bus bars 471 therebetween will be described as an example.

As such, the gas tunnel portion 472 is installed in the upper plate 470, and thus the gas may be smoothly discharged to the outside in an abnormal operating state of the battery modules 500 to prevent an abnormal explosion or the like from occurring.

As described above, the battery modules 500 of the present embodiment are assembled to be disassemblable and assemblable by fastening of a fastening member replacing a welding process in an assembly process, and thus a structure of the battery modules may be simplified and a design thereof may be easily changed.

In addition, a cooling circuit is formed outside the base plate supporting the battery module, and thus it is possible to prevent an electrical flow path from being generated during an operation of the battery modules.

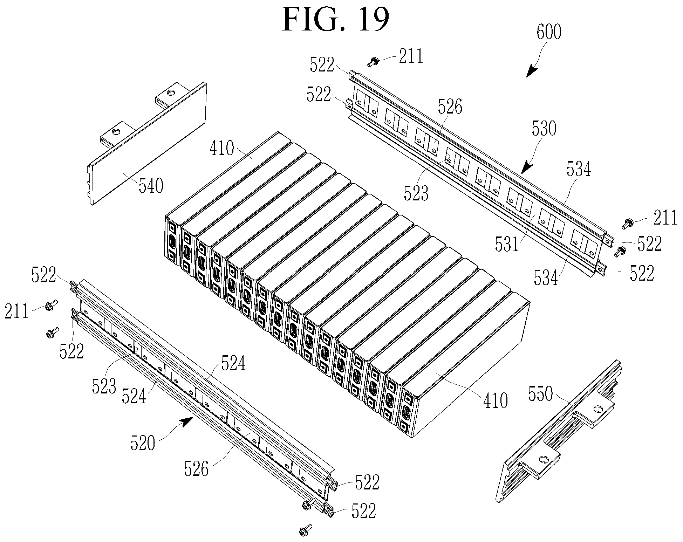

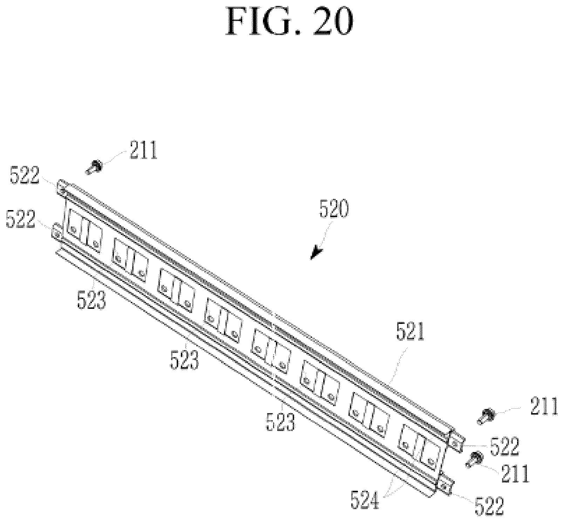

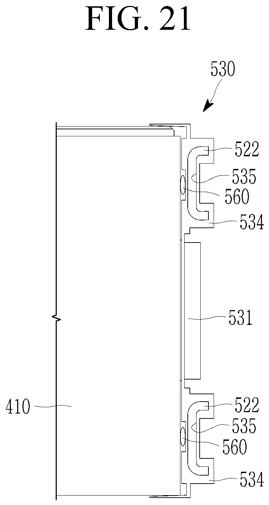

FIG. 19 illustrates a schematic exploded perspective view showing a battery module according to a second embodiment of the present invention, FIG. 20 illustrates a schematic perspective view showing a first side portion of FIG. 19, and FIG. 21 illustrates a schematic side view showing a state in which an insert bar of the battery module of FIG. 19 is installed.

As illustrated in FIG. 19 to FIG. 21, the battery module 600 according to the second embodiment of the present invention includes a first side portion 520 supporting a first side of the battery cells 410, a second side portion 530 supporting a second side of the battery cells 410, a first end portion 540 having opposite ends connected to a first end of each of the first side portion 520 and the second side portion 530 by the fastening member 211, a second end portion 550 having opposite ends connected to a second end of each of the first side portion 520 and the second side portion 530 by the fastening member 211, and an insert bar 522 inserted into the first side portion 520 and the second side portion 530.

The first side portion 520 may be coupled to a first edge of the base plate 100, and may be installed to support a first side of the battery cells 410.

The first side portion 520 may be supported in a state of being in surface contact with a side surface of the battery cells 410.

The first side portion 520 may be formed of a plastic material to support a first side of the battery cells 410 in an insulated state.

More specifically, the first side portion 520 may include a first plate 521 having a plurality of through holes 523 into which terminals of the battery cells 410 are inserted, and a first insert portion 524 that protrudes from a side surface of a first plate 521 and has an insertion hole into which an insert bar 522 is inserted.

The first plate 521 may be supported in surface contact with a side surface of the battery cells 410, and may be formed of a plastic material to support a first side of the battery cells 410 in an insulated state.

The first plate 521 may be formed with a plurality of through holes 523 along a longitudinal direction, and terminals of the battery cells 410 may be installed to be inserted into the through holes 523. To this end, the battery cells 410 may be positioned such that terminals face the through hole 523 of the first plate 521.

A first insert portion 524 into which an insert bar 522 for reinforcement is inserted may protrude from the first plate 521.

The first insert portion 524 may be formed to protrude from the side surface of the first plate 521 in a longitudinal direction, and an insertion hole into which the insert bar 522 is inserted may be formed.

The insert bar 522 is formed to a length corresponding to a length of the first plate 521 to be inserted into the first insert portion 524, and may be formed of a metal material to ensure durability.

The second side portion 530 may be coupled to a second edge of the base plate 100, and may be installed to support a second side of the battery cells 410.

The second side portion 530 may be supported in a state of being in surface contact with a side surface of the battery cells 410.

The second side portion 530 may be formed of a plastic material to support a second side of the battery cells 410 in an insulated state.

A second insert portion 534 into which an insert bar 522 for reinforcement is inserted may protrude from the second plate 531.

The second insert portion 534 may be formed to protrude from the side surface of the second plate 531 in a longitudinal direction, and an insertion hole into which the insert bar 522 is inserted may be formed.

The insert bar 522 is formed to a length corresponding to a length of the second plate 531 to be inserted into the second insert portion 534, and may be formed of a metal material to ensure durability.

A bus bar 526 electrically connected to terminals of the battery cells 410 may be installed in each of the first plate 521 and the second plate 531.

Meanwhile, each of the first plate 521 and the second plate 531 may be coated with an adhesive 560 at a position in surface contact with the battery cells 410.

The adhesive 560 may be applied to a surface of each of the first plate 521 and the second plate 531 in a longitudinal direction, and thus a fixing force of each of the first plate 521 and the second plate 531 installed on side surfaces of the battery cells 410 may be improved.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

### <Description of Symbols>

10...first cooling plate 11...first cooling passage
20...second cooling plate 21...second cooling passage
30...third cooling plate 31...third cooling passage
40... refrigerant supply guide 41...supply guide body
42... inlet protrusion 43...supply protrusion
50...distribution supply guide 51...distribution guide body
52...distribution protrusion 60...refrigerant discharge guide
61... discharge guide body 63... connection protrusion
65... discharge protrusion 100...base plate
200...lower cover 210...first side frame
211...fastening member
220...second side frame 230...first end frame
240...second end frame 250...first reinforcement bar
251... coupling groove
260...second reinforcement bar 261... insertion groove
270...sealing member
271...inlet groove 272...first sealer
272a... bent portion 273... fastening hole
274...second sealer 275...adhesion groove
276...adhesive 300...frame portion
400...upper cover 410...battery cell
420...first side plate 430...second side plate
440...first end plate 441...first mount protrusion
442...first coupling hole 450...second end plate
451...second mount protrusion 452...second coupling hole
460... insulation plate 461... adhesive
462...first coupling protrusion 464 second coupling protrusion
470...upper plate 471... bus bar
472...gas tunnel portion 500...battery module
520...first side portion 521...first plate
522... insert bar 523...through hole
524...first insert portion 526...bus bar
530...second side portion 531...second plate
534...second insert portion 540...first end portion
550...second end portion 560...adhesive
700...battery pack

## Claims

1. A battery pack (700), comprising:
a base plate (100) configured to include a cooling passage (11, 12, 13) through which a refrigerant for cooling a plurality of battery modules (500) is circulated by contacting the battery modules (500) with a first surface;
a lower cover (200) configured to cover a second surface of the base plate (100);
a frame portion (300) installed on an upper side of a first surface of the base plate (100) to accommodate the battery modules (500) therein and to couple a plurality of frames (210,220, 230, 240) to each other by a fastening member (211);
a sealing member (270) sealing spaces between the frames of the frame portion (300); and
an upper cover (400) covering an upper portion of the frame portion (300);
wherein
the cooling passage (11, 12, 13) is formed on a second surface that is opposite to the first surface of the base plate (100);
the base plate (100) includes at least two cooling plates (10, 20, 30) having edges that are welded to each other; and
the base plate (100) includes:
a first cooling plate (10) configured to contact the battery modules (500) on a first surface and to protrude a first cooling passage (11) on a second surface;
a second cooling plate (20) to have a first edge coupled to a first edge of the first cooling plate (10), a first surface contacting the battery modules (500), and a second surface from which a second cooling passage (21) protrudes; and
a third cooling plate (30) to have a first edge coupled to a second edge of the second cooling plate (20), a first surface contacting the battery modules (500), and a second surface from which a third cooling passage (31) protrudes.

2. The battery pack (700) of claim 1, wherein
the first to third cooling passages (11, 21, 31) are formed as a plurality in each of the first to third cooling plates (10, 20,30).

3. The battery pack (700) of claim 2, wherein
a refrigerant supply guide (40) is installed at a first side of the second surface of the base plate (100) to guide supply of a refrigerant to the first cooling passage (11) and portions of the second cooling passage (21).

4. The battery pack (700) of claim 3, wherein
the refrigerant supply guide (40) is installed to supply the refrigerant to the first cooling passage (11) of the first cooling plate (10) and portions of the second cooling passage (21) of the second cooling plate (20).

5. The battery pack (700) of claim 4, wherein
the refrigerant supply guide (40) extends in a width direction of the first cooling plate (10) such that a portion thereof covers a portion of the second surface of the second cooling plate (20) to supply the refrigerant to the first cooling passage (11) and portions of the second cooling passage (21).

6. The battery pack (700) of claim 5, wherein
the refrigerant supply guide (40) includes:
a supply guide body (41) configured to extend in the width direction of the first cooling plate (10), to cover the first cooling plate (10) and portions of the second cooling plate (20) together, and to move a refrigerant therein;
an inlet protrusion (42) configured to protrude from a first side of the supply guide body (40) and into which the refrigerant flows; and
a plurality of supply protrusions (43) configured to protrude from a second side of the supply guide body (40) and to supply the refrigerant to the first cooling passage (11) and portions of the second cooling passage (21).

7. The battery pack (700) of claim 5 or claim 6, wherein
a distribution supply guide (50) configured to distribute the refrigerant supplied by the refrigerant supply guide (40) to circulate is installed at a second side of the second surface of the base plate (100).

8. The battery pack (700) of claim 7, wherein
the distribution supply guide (50) includes:
a distribution guide body (51) configured to extend in a width direction of the base plate (100) from the second side of the second surface of the base plate (100) and to move the refrigerant therein; and
a plurality of distribution protrusions (52) configured to protrude from a side surface of the distribution guide body (51) and to be connected to the first cooling passage (11), the second cooling passage (21), and the third cooling passage (31).

9. The battery pack (700) of claim 8, wherein
a refrigerant discharge guide (60) connected to some of the second cooling passages (21) of the second cooling plate (20) and the third cooling passage (31) of the third cooling plate (30) is installed to guide discharge of the refrigerant to the outside on the second surface of the base plate (100).

10. The battery pack (700) of claim 9, wherein
the refrigerant discharge guide (60)extends in a width direction of the third cooling plate (30) such that a portion thereof covers a portion of the second surface of the second cooling plate (20) to discharge and guide the refrigerant flowing through the third cooling passage (31) and some of the second cooling passages (21) to the outside, optionally wherein
the refrigerant discharge guide (60) includes:
a discharge guide body (61) configured to extend in a width direction of the third cooling plate (30) such that a portion thereof covers a portion of the second surface of the second cooling plate (20), and to move the refrigerant therein;
a connecting protrusion (63) configured to protrude from a first side of the discharge guide body (61) and connected to some of the second cooling passages (21) and the third cooling passage (31) to receive the refrigerant; and
a discharge protrusion (65) configured to protrude from a second side of the discharge guide body (61) and to discharge the refrigerant to the outside.

11. The battery pack (700) of any one of claims 1 to 10, wherein
the sealing member (270) includes:
a first sealer (272) inserted into an inlet groove (271) formed on any one surface between the frames (210, 220, 230, 240); and
a second sealer (274) inserted into a position of a fastening hole (273) formed in the frame (210, 220, 230, 240) to allow the fastening member (211) to be coupled thereto, optionally wherein
the first sealer (272) contacts a side surface of the frames (210, 220, 230, 240) by allowing a first side to be inserted into the inlet groove (271) and a second side to partially protrude out of the inlet groove (271).

12. The battery pack (700) of claim 11, wherein
the first sealer (272) has a linear shape inserted into the inlet groove (271).

13. The battery pack (700) of claim 12, wherein
a bent portion (272a) that is bent to contact an upper surface of the frames (210, 220, 230, 240) is formed at an upper end of the first sealer (272), optionally wherein
the bent portion (272a) of the first sealer (272) is adhered to the upper cover (400) by an adhesive member.

14. The battery pack (700) of claim 12 or claim 13, wherein:
(i) the second sealer (274) has a through hole through which the fastening member (211) extends, to be inserted into the fastening hole (273) at a position between the frames (210, 220, 230, 240); and/or
the second sealer (274) has a round shape inserted into the fastening hole (273).

15. The battery pack (700) of any one of claims 1 to 14, wherein
the frame portion (300) includes:
a first side frame (210) coupled to a first edge of the base plate (100);
a second side (220) frame coupled to a second edge of the base plate (100);
a first end frame (230) configured to have opposite ends connected to a first end of each of the first side frame (210) and the second side frame (220) by a fastening member (211);
a second end frame (240) configured to have opposite ends connected to a second end of each of the first side frame (210) and the second side frame (220) by a fastening member (211);
a plurality of first reinforcement bars (250) configured to have a first end connected to a side surface of the first side frame (210) by a fastening member (211) and a second end connected to a side surface of the second side frame (220) by a fastening member (211); and
a plurality of second reinforcement bars (260) configured to have a first end connected to a side surface of the first end frame (230) by a fastening member (211) and a second end connected to the second end frame (240) by a fastening member (211), and installed in a state of crossing the first reinforcement bars (250), optionally wherein
an adhesive groove (275) is formed on a lower surface of the frame portion (300), and an adhesive (276) for fixing the base plate (100) is applied to the adhesive groove (275).

## Patentansprüche

1. Batteriepack (700), umfassend:
eine Grundplatte (100), die konfiguriert ist, um einen Kühlkanal (11, 12, 13) zu beinhalten, durch den ein Kühlmittel zum Kühlen einer Vielzahl von Batteriemodulen (500) zirkuliert, indem die Batteriemodule (500) mit einer ersten Fläche in Kontakt gebracht werden;
eine untere Abdeckung (200), die konfiguriert ist, um eine zweite Fläche der Grundplatte (100) abzudecken;
einen Rahmenabschnitt (300), der an einer oberen Seite einer ersten Fläche der Grundplatte (100) angebracht ist, um die Batteriemodule (500) darin aufzunehmen und um eine Vielzahl von Rahmen (210, 220, 230, 240) durch ein Befestigungselement (211) miteinander zu koppeln;
ein Dichtungselement (270), das Räume zwischen den Rahmen des Rahmenabschnitts (300) abdichtet; und
eine obere Abdeckung (400), die einen oberen Teil des Rahmenabschnitts (300) abdeckt;
wobei
der Kühlkanal (11, 12, 13) auf einer zweiten Fläche ausgebildet ist, die der ersten Fläche der Grundplatte (100) gegenüberliegt;
die Grundplatte (100) mindestens zwei Kühlplatten (10, 20, 30) beinhaltet, die Kanten aufweisen, die miteinander verschweißt sind; und
die Grundplatte (100) beinhaltet:
eine erste Kühlplatte (10), die konfiguriert ist, um auf einer ersten Fläche die Batteriemodule (500) zu kontaktieren und auf einer zweiten Fläche einen ersten Kühlkanal (11) vorstehen zu lassen;
eine zweite Kühlplatte (20), die eine erste Kante, die mit einer ersten Kante der ersten Kühlplatte (10) gekoppelt ist, eine erste Fläche, die die Batteriemodule (500) kontaktiert, und eine zweite Fläche, von der ein zweiter Kühlkanal (21) vorsteht, aufweist; und
eine dritte Kühlplatte (30), die eine erste Kante, die mit einer zweiten Kante der zweiten Kühlplatte (20) gekoppelt ist, eine erste Fläche, die die Batteriemodule (500) kontaktiert, und eine zweite Fläche, von der ein dritter Kühlkanal (31) vorsteht, aufweist.

2. Batteriepack (700) nach Anspruch 1, wobei
die ersten bis dritten Kühlkanäle (11, 21, 31) als eine Vielzahl in jeder der ersten bis dritten Kühlplatten (10, 20, 30) ausgebildet sind.

3. Batteriepack (700) nach Anspruch 2, wobei
ein Kühlmittelzufuhrkanal (40) an einer ersten Seite der zweiten Fläche der Grundplatte (100) angebracht ist, um die Zufuhr eines Kühlmittels zu dem ersten Kühlkanal (11) und zu Abschnitten des zweiten Kühlkanals (21) zu leiten.

4. Batteriepack (700) nach Anspruch 3, wobei
der Kühlmittelzufuhrkanal (40) angebracht ist, um das Kühlmittel zu dem ersten Kühlkanal (11) der ersten Kühlplatte (10) und zu Abschnitten des zweiten Kühlkanals (21) der zweiten Kühlplatte (20) zuzuführen.

5. Batteriepack (700) nach Anspruch 4, wobei
der Kühlmittelzufuhrkanal (40) sich in einer Breitenrichtung der ersten Kühlplatte (10) erstreckt, so dass ein Abschnitt davon einen Abschnitt der zweiten Fläche der zweiten Kühlplatte (20) abdeckt, um das Kühlmittel zu dem ersten Kühlkanal (11) und zu Abschnitten des zweiten Kühlkanals (21) zuzuführen.

6. Batteriepack (700) nach Anspruch 5, wobei
der Kühlmittelzufuhrkanal (40) beinhaltet:
ein Zufuhrkanalgehäuse (41), das konfiguriert ist, um sich in der Breitenrichtung der ersten Kühlplatte (10) zu erstrecken, um die erste Kühlplatte (10) und Abschnitte der zweiten Kühlplatte (20) gemeinsam abzudecken und um ein Kühlmittel darin zu bewegen;
einen Einlassvorsprung (42), der konfiguriert ist, um von einer ersten Seite des Zufuhrkanalgehäuses (41) vorzustehen und in den das Kühlmittel einströmt; und
eine Vielzahl von Zufuhrvorsprüngen (43), die konfiguriert ist, um von einer zweiten Seite des Zufuhrkanalgehäuses (40) vorzustehen und um das Kühlmittel zu dem ersten Kühlkanal (11) und zu Abschnitten des zweiten Kühlkanals (21) zuzuführen.

7. Batteriepack (700) nach Anspruch 5 oder Anspruch 6, wobei
ein Verteilzufuhrkanal (50), der konfiguriert ist, um das von dem Kühlmittelzufuhrkanal (40) zugeführte Kühlmittel zur Zirkulation zu verteilen, an einer zweiten Seite der zweiten Fläche der Grundplatte (100) angebracht ist.

8. Batteriepack (700) nach Anspruch 7, wobei
der Verteilzufuhrkanal (50) beinhaltet:
ein Verteilkörpergehäuse (51), das konfiguriert ist, um sich von der zweiten Seite der zweiten Fläche der Grundplatte (100) in einer Breitenrichtung der Grundplatte (100) zu erstrecken und um das Kühlmittel darin zu bewegen; und
eine Vielzahl von Verteilvorsprüngen (52), die konfiguriert sind, um von einer Seitenfläche des Verteilkörpergehäuses (51) vorzustehen und mit dem ersten Kühlkanal (11), dem zweiten Kühlkanal (21) und dem dritten Kühlkanal (31) verbunden zu sein.

9. Batteriepack (700) nach Anspruch 8, wobei
ein Kühlmittelabfuhrkanal (60), der mit einigen der zweiten Kühlkanäle (21) der zweiten Kühlplatte (20) und dem dritten Kühlkanal (31) der dritten Kühlplatte (30) verbunden ist, angebracht ist, um die Abfuhr des Kühlmittels nach außen auf der zweiten Fläche der Grundplatte (100) zu leiten.

10. Batteriepack (700) nach Anspruch 9, wobei
der Kühlmittelabfuhrkanal (60) sich in einer Breitenrichtung der dritten Kühlplatte (30) erstreckt, so dass ein Abschnitt davon einen Abschnitt der zweiten Fläche der zweiten Kühlplatte (20) abdeckt, um das durch den dritten Kühlkanal (31) und einige der zweiten Kühlkanäle (21) strömende Kühlmittel nach außen abzuführen und zu leiten, wobei optional
der Kühlmittelabfuhrkanal (60) beinhaltet:
ein Abfuhrkanalgehäuse (61), das konfiguriert ist, um sich in einer Breitenrichtung der dritten Kühlplatte (30) zu erstrecken, so dass ein Abschnitt davon einen Abschnitt der zweiten Fläche der zweiten Kühlplatte (20) abdeckt, und um das Kühlmittel darin zu bewegen;
einen Verbindungsvorsprung (63), der konfiguriert ist, um von einer ersten Seite des Abfuhrkanalgehäuses (61) vorzustehen und mit einigen der zweiten Kühlkanäle (21) und dem dritten Kühlkanal (31) verbunden zu sein, um das Kühlmittel aufzunehmen; und
einen Abfuhrvorsprung (65), der konfiguriert ist, um von einer zweiten Seite des Abfuhrkanalgehäuses (61) vorzustehen und um das Kühlmittel nach außen abzuführen.

11. Batteriepack (700) nach einem der Ansprüche 1 bis 10, wobei das Dichtungselement (270) beinhaltet:
ein erstes Dichtungselement (272), das in eine Einlassnut (271) eingefügt ist, die auf einer beliebigen Fläche zwischen den Rahmen (210, 220, 230, 240) ausgebildet ist; und
ein zweites Dichtungselement (274), das an einer Position eines Befestigungslochs (273) eingefügt ist, das in dem Rahmen (210, 220, 230, 240) ausgebildet ist, um das Koppeln des Befestigungselements (211) daran zu ermöglichen, wobei optional
das erste Dichtungselement (272) eine Seitenfläche der Rahmen (210, 220, 230, 240) kontaktiert, indem ermöglicht wird, dass eine erste Seite in die Einlassnut (271) eingesetzt wird und eine zweite Seite teilweise aus der Einlassnut (271) vorsteht.

12. Batteriepack (700) nach Anspruch 11, wobei
das erste Dichtungselement (272) eine lineare Form hat, die in die Einlassnut (271) eingesetzt ist.

13. Batteriepack (700) nach Anspruch 12, wobei
ein abgewinkelter Abschnitt (272a), der abgewinkelt ist, um eine obere Fläche der Rahmen (210, 220, 230, 240) zu kontaktieren, an einem oberen Ende des ersten Dichtungselements (272) ausgebildet ist, wobei optional
der abgewinkelte Abschnitt (272a) des ersten Dichtungselements (272) durch ein Klebeelement an der oberen Abdeckung (400) angebracht ist.

14. Batteriepack (700) nach Anspruch 12 oder Anspruch 13, wobei:
(i) (i) das zweite Dichtungselement (274) ein Durchgangsloch aufweist, durch das sich das Befestigungselement (211) erstreckt, um an einer Position zwischen den Rahmen (210, 220, 230, 240) in das Befestigungsloch (273) eingesetzt zu werden; und/oder
das zweite Dichtungselement (274) eine runde Form hat, die in das Befestigungsloch (273) eingesetzt ist.

15. Batteriepack (700) nach einem der Ansprüche 1 bis 14, wobei der Rahmenabschnitt (300) beinhaltet:
einen ersten Seitenrahmen (210), der mit einer ersten Kante der Grundplatte (100) gekoppelt ist;
einen zweiten Seitenrahmen (220), der mit einer zweiten Kante der Grundplatte (100) gekoppelt ist;
einen ersten Endrahmen (230), der konfiguriert ist, um gegenüberliegende Enden aufzuweisen, die durch ein Befestigungselement (211) mit einem ersten Ende jeweils des ersten Seitenrahmens (210) und des zweiten Seitenrahmens (220) verbunden sind;
einen zweiten Endrahmen (240), der konfiguriert ist, um gegenüberliegende Enden aufzuweisen, die durch ein Befestigungselement (211) mit einem zweiten Ende jeweils des ersten Seitenrahmens (210) und des zweiten Seitenrahmens (220) verbunden sind;
eine Vielzahl erster Verstärkungsstäbe (250), die so konfiguriert sind, um ein erstes Ende aufzuweisen, das mittels eines Befestigungselements (211) mit einer Seitenfläche des ersten Seitenrahmens (210) verbunden ist, und ein zweites Ende aufzuweisen, das mittels eines Befestigungselements (211) mit einer Seitenfläche des zweiten Seitenrahmens (220) verbunden ist; und
eine Vielzahl von zweiten Verstärkungsstäben (260), die konfiguriert sind, um ein erstes Ende aufzuweisen, das durch ein Befestigungselement (211) mit einer Seitenfläche des ersten Endrahmens (230) verbunden ist, und ein zweites Ende aufzuweisen, das durch ein Befestigungselement (211) mit dem zweiten Endrahmen (240) verbunden ist, und die in einem Zustand installiert sind, in dem sie die ersten Verstärkungsstäbe (250) kreuzen, wobei optional
eine Klebenut (275) auf einer unteren Fläche des Rahmenabschnitts (300) ausgebildet ist und ein Klebstoff (276) zum Befestigen der Grundplatte (100) in die Klebenut (275) aufgetragen ist.

## Revendications

1. Bloc-batterie (700), comprenant :
une plaque de base (100) configurée pour inclure un passage de refroidissement (11, 12, 13) à travers lequel un réfrigérant destiné à refroidir une pluralité de modules de batterie (500) est mis en circulation en mettant en contact les modules de batterie (500) avec une première surface ;
un couvercle inférieur (200) configuré pour recouvrir une seconde surface de la plaque de base (100) ;
une partie cadre (300) installée sur un côté supérieur d'une première surface de la plaque de base (100) pour accueillir les modules de batterie (500) et pour coupler une pluralité de cadres (210, 220, 230, 240) entre eux par un élément de fixation (211) ;
un élément d'étanchéité (270) scellant des espaces entre les cadres de la partie cadre (300) ; et
un couvercle supérieur (400) recouvrant une partie supérieure de la partie cadre (300) ;
dans lequel
le passage de refroidissement (11, 12, 13) est formé sur une seconde surface opposée à la première surface de la plaque de base (100) ;
la plaque de base (100) inclut au moins deux plaques de refroidissement (10, 20, 30) dont les bords sont soudés entre eux ; et
la plaque de base (100) inclut :
une première plaque de refroidissement (10) configurée pour entrer en contact avec les modules de batterie (500) sur une première surface et pour faire saillie à partir d'un premier passage de refroidissement (11) sur une seconde surface ;
une deuxième plaque de refroidissement (20) dont un premier bord est couplé à un premier bord de la première plaque de refroidissement (10), une première surface entrant en contact avec les modules de batterie (500) et une seconde surface à partir de laquelle un deuxième passage de refroidissement (21) fait saillie ; et
une troisième plaque de refroidissement (30) dont un premier bord est couplé à un second bord de la deuxième plaque de refroidissement (20), une première surface entrant en contact avec les modules de batterie (500) et une seconde surface à partir de laquelle un troisième passage de refroidissement (31) fait saillie.

2. Bloc-batterie (700) selon la revendication 1, dans lequel
les premier à troisième passages de refroidissement (11, 21, 31) sont formés en pluralité dans chacune des première à troisième plaques de refroidissement (10, 20, 30).

3. Bloc-batterie (700) selon la revendication 2, dans lequel
un guide d'alimentation en réfrigérant (40) est installé sur un premier côté de la seconde surface de la plaque de base (100) pour guider l'alimentation en réfrigérant vers le premier passage de refroidissement (11) et des parties du deuxième passage de refroidissement (21).

4. Bloc-batterie (700) selon la revendication 3, dans lequel
le guide d'alimentation en réfrigérant (40) est installé pour alimenter en réfrigérant le premier passage de refroidissement (11) de la première plaque de refroidissement (10) et des parties du deuxième passage de refroidissement (21) de la deuxième plaque de refroidissement (20).

5. Bloc-batterie (700) selon la revendication 4, dans lequel
le guide d'alimentation en réfrigérant (40) s'étend dans une direction de largeur de la première plaque de refroidissement (10) de telle sorte qu'une partie de celui-ci recouvre une partie de la seconde surface de la deuxième plaque de refroidissement (20) pour alimenter en réfrigérant le premier passage de refroidissement (11) et des parties du deuxième passage de refroidissement (21).

6. Bloc-batterie (700) selon la revendication 5, dans lequel
le guide d'alimentation en réfrigérant (40) inclut :
un corps de guide d'alimentation (41) configuré pour s'étendre dans la direction de largeur de la première plaque de refroidissement (10) afin de recouvrir ensemble la première plaque de refroidissement (10) et des parties de la deuxième plaque de refroidissement (20) et pour déplacer un réfrigérant à l'intérieur de celui-ci ;
une saillie d'entrée (42) configurée pour faire saillie à partir d'un premier côté du corps de guide d'alimentation (40) et dans laquelle le réfrigérant s'écoule ; et
une pluralité de saillies d'alimentation (43) configurées pour faire saillie à partir d'un second côté du corps de guide d'alimentation (40) et pour fournir le réfrigérant au premier passage de refroidissement (11) et à des parties du deuxième passage de refroidissement (21).

7. Bloc-batterie (700) selon la revendication 5 ou la revendication 6, dans lequel
un guide d'alimentation de distribution (50) configuré pour distribuer le réfrigérant alimenté par le guide d'alimentation de réfrigérant (40) à faire circuler est installé sur un second côté de la seconde surface de la plaque de base (100).

8. Bloc-batterie (700) selon la revendication 7, dans lequel
le guide d'alimentation de distribution (50) inclut :
un corps de guide de distribution (51) configuré pour s'étendre dans une direction de largeur de la plaque de base (100) à partir du second côté de la seconde surface de la plaque de base (100) et pour déplacer le réfrigérant à l'intérieur de celui-ci ; et
une pluralité de saillies de distribution (52) configurées pour faire saillie à partir d'une surface latérale du corps de guide de distribution (51) et pour être reliées au premier passage de refroidissement (11), au deuxième passage de refroidissement (21) et au troisième passage de refroidissement (31).

9. Bloc-batterie (700) selon la revendication 8, dans lequel
un guide d'évacuation de réfrigérant (60) relié à certains des deuxièmes passages de refroidissement (21) de la deuxième plaque de refroidissement (20) et au troisième passage de refroidissement (31) de la troisième plaque de refroidissement (30) est installé pour guider l'évacuation du réfrigérant vers l'extérieur sur la seconde surface de la plaque de base (100).

10. Bloc-batterie (700) selon la revendication 9, dans lequel
le guide d'évacuation de réfrigérant (60) s'étend dans une direction de largeur de la troisième plaque de refroidissement (30) de telle sorte qu'une partie de celui-ci recouvre une partie de la seconde surface de la deuxième plaque de refroidissement (20) afin d'évacuer et de guider le réfrigérant s'écoulant à travers le troisième passage de refroidissement (31) et certains des deuxièmes passages de refroidissement (21) vers l'extérieur, facultativement dans lequel
le guide d'évacuation de réfrigérant (60) inclut :
un corps de guide d'évacuation (61) configuré pour s'étendre dans une direction de largeur de la troisième plaque de refroidissement (30) de telle sorte qu'une partie de celui-ci recouvre une partie de la seconde surface de la deuxième plaque de refroidissement (20) et pour déplacer le réfrigérant à l'intérieur de celui-ci ;
une saillie de liaison (63) configurée pour faire saillie à partir d'un premier côté du corps de guide d'évacuation (61) et reliée à certains des deuxièmes passages de refroidissement (21) et au troisième passage de refroidissement (31) pour recevoir le réfrigérant ; et
une saillie d'évacuation (65) configurée pour faire saillie à partir d'un second côté du corps de guide d'évacuation (61) et pour évacuer le réfrigérant vers l'extérieur.

11. Bloc-batterie (700) selon l'une quelconque des revendications 1 à 10, dans lequel l'élément d'étanchéité (270) inclut :
un premier dispositif de scellage (272) inséré dans une rainure d'entrée (271) formée sur une surface quelconque entre les cadres (210, 220, 230, 240) ; et
un second dispositif de scellage (274) inséré dans un trou de fixation (273) formé dans le cadre (210, 220, 230, 240) pour permettre à l'élément de fixation (211) d'être couplé à celui-ci, facultativement dans lequel
le premier dispositif de scellage (272) entre en contact avec une surface latérale des cadres (210, 220, 230, 240) en permettant à un premier côté d'être inséré dans la rainure d'entrée (271) et à un second côté de faire saillie partiellement de la rainure d'entrée (271).

12. Bloc-batterie (700) selon la revendication 11, dans lequel
le premier dispositif de scellage (272) présente une forme linéaire insérée dans la rainure d'entrée (271).

13. Bloc-batterie (700) selon la revendication 12, dans lequel
une partie courbée (272a) qui est recourbée pour entrer en contact avec une surface supérieure des cadres (210, 220, 230, 240) est formée à une extrémité supérieure du premier dispositif de scellage (272), facultativement dans lequel
la partie courbée (272a) du premier dispositif de scellage (272) est collée au couvercle supérieur (400) par un élément adhésif.

14. Bloc-batterie (700) selon la revendication 12 ou la revendication 13, dans lequel :
(i) le second dispositif de scellage (274) présente un trou traversant à travers lequel l'élément de fixation (211) s'étend, pour être inséré dans le trou de fixation (273) à une position entre les cadres (210, 220, 230, 240) ; et/ou
le second dispositif de scellage (274) présente une forme ronde insérée dans le trou de fixation (273).

15. Bloc-batterie (700) selon l'une quelconque des revendications 1 à 14, dans lequel la partie cadre (300) inclut :
un premier cadre latéral (210) couplé à un premier bord de la plaque de base (100) ;
un second cadre latéral (220) couplé à un second bord de la plaque de base (100) ;
un premier cadre d'extrémité (230) configuré pour présenter des extrémités opposées reliées à une première extrémité de chacun parmi le premier cadre latéral (210) et le second cadre latéral (220) par un élément de fixation (211) ;
un second cadre d'extrémité (240) configuré pour présenter des extrémités opposées reliées à une seconde extrémité de chacun parmi le premier cadre latéral (210) et le second cadre latéral (220) par un élément de fixation (211) ;
une pluralité de premières barres de renfort (250) configurées pour présenter une première extrémité reliée à une surface latérale du premier cadre latéral (210) par un élément de fixation (211) et une seconde extrémité reliée à une surface latérale du second cadre latéral (220) par un élément de fixation (211) ; et
une pluralité de secondes barres de renfort (260) configurées pour présenter une première extrémité reliée à une surface latérale du premier cadre d'extrémité (230) par un élément de fixation (211) et une seconde extrémité reliée au second cadre d'extrémité (240) par un élément de fixation (211), et installées dans un état de croisement des premières barres de renfort (250), facultativement dans lequel
une rainure adhésive (275) est formée sur une surface inférieure de la partie cadre (300), et un adhésif (276) destiné à fixer la plaque de base (100) est appliqué à la rainure adhésive (275).
